# EUROPEAN PATENT APPLICATION

(11) **EP 4 773 393 A1**
(43) Date of publication of application: **08.07.2026**
(21) Application number: 24863294.5
(22) Date of filing: 09.09.2024
(51) Int. Cl.: H01M 50/411, H01M 50/417, H01M 50/446, H01M 50/449, H01M 10/052, H01M 50/403, C08J 5/22, C08J 9/36

(54) **SEPARATOR, LITHIUM SECONDARY BATTERY COMPRISING SAME, AND METHOD FOR MANUFACTURING SAME**

(30) Priority: 08.09.2023 KR 20230119975
(71) Applicant: LG Chem, Ltd., Seoul 07336 (KR)
(72) Inventor: PARK, Beom-Su, Daejeon 34122 (KR); KIM, Se-Jong, Daejeon 34122 (KR); KIM, Hyun-Cheol, Daejeon 34122 (KR); KIM, Jin-Woo, Daejeon 34122 (KR); YANG, Hyung-Il, Daejeon 34122 (KR)
(74) Representative: Hoffmann Eitle
(86) International application number: PCT/KR2024/013645
(87) International publication number: WO 2025/053715

(57) **Abstract**

Proposed are: a polyolefin porous support; and a separator, a lithium secondary battery comprising same, and a method for manufacturing same, wherein the polyolefin porous support comprises a plurality of fibrils and pores formed by the plurality of fibrils entangling with each other, polyolefin chains constituting the fibrils are directly cross-linked with each other, and the polyolefin porous support comprises polyethylene glycol containing a hydrophilic photoinitiator-derived functional group.

## Description

### Technical Field

The present disclosure relates to a separator, a lithium secondary battery including the same, and a method for manufacturing the same.

This application claims priority to Korean Patent Application No. 10-2023-0119975, filed on September 8, 2023, the entire disclosure of which is incorporated herein by reference.

### Background Art

Recently, interest in energy storage technology is increasing. As its application fields expand to energy of mobile phones, camcorders, laptops, and even electric vehicles, there is a growing demand for high energy density of batteries used as power sources for these electronic devices. Lithium secondary batteries are batteries that can best meet these demands, and active research thereon is currently being conducted.

These lithium secondary batteries are composed of a positive electrode, a negative electrode, an electrolyte, and a separator, wherein the separator is required to have insulating properties to separate and electrically insulate the positive electrode and the negative electrode, as well as high ionic conductivity to increase lithium ion permeability based on high porosity.

As such separators, polymer separators made of olefin-based materials are widely used. However, in the case of ethylene polymer (PE)-based separators, which are representative olefin-based polymer separators, since the melting point (Tm) is low, when the temperature of the battery rises to or above the melting point of the ethylene polymer under a battery misuse environment, a melt-down phenomenon may occur, causing ignition and explosion. Furthermore, due to its material properties and manufacturing process characteristics, the separator exhibits severe thermal shrinkage behavior under high-temperature conditions, etc., leading to safety issues such as internal short circuits.

Accordingly, various methods for improving the heat resistance of olefin polymer separators have been devised.

Korean Patent Laid-Open Publication No. 10-2006-0021221 proposes a separator in which a coating layer including ceramic particles as inorganic fillers and a binder polymer is formed on at least one surface of an olefin polymer separator.

In order to form a coating layer including such ceramic particles as inorganic fillers and a binder polymer, a slurry for forming a coating layer using an organic solvent as a medium has been mainly applied.

Recently, due to cost considerations, environmental issues, global ESG management, etc., there has been a demand for the slurry for forming a coating layer of a separator for secondary batteries to gradually shift from an organic solvent-based slurry to an aqueous slurry using water as a solvent.

Meanwhile, since an olefin polymer porous support, which is mainly used as a separator substrate, is hydrophobic, there is a limitation in electrolyte impregnation into a separator during the electrolyte injection process in the production of secondary batteries. Thus, there is a demand for the development of a separator that allows rapid and sufficient electrolyte impregnation.

### Disclosure

### Technical Problem

Accordingly, an object of the present disclosure is to solve the above-described problems, and to provide a separator having improved electrolyte impregnation properties, a lithium secondary battery including the same, and a method for manufacturing the same.

### Technical Solution

In order to solve the above problems, according to one aspect of the present disclosure, separators of the following embodiments are provided.

According to a first embodiment,
there is provided a separator including an olefin polymer porous support
wherein the olefin polymer porous support includes a plurality of fibrils and pores formed by the plurality of fibrils entangled with one another, polyolefin chains constituting the fibrils are directly crosslinked to each other, and
the olefin polymer porous support includes polyethylene glycol containing a hydrophilic photoinitiator-derived functional group.

According to a second embodiment, in the first embodiment,
the hydrophilic photoinitiator may include an aromatic carbonyl compound having a hydrophilic group.

According to a third embodiment, in the first embodiment or the second embodiment,
the hydrophilic photoinitiator may be represented by Chemical Formula 1 below: 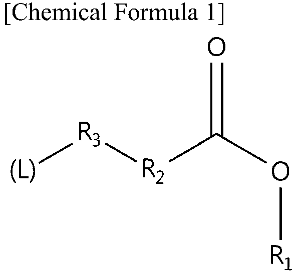
wherein R₁ is hydrogen, a linear or branched alkyl group having 1 to 10 carbon atoms, or an aryl group having 6 to 20 carbon atoms, R₂ is a single bond, a linear or branched alkylene group having 1 to 10 carbon atoms, or an arylene group having 6 to 12 carbon atoms, R₃ is a single bond, oxygen (O), or sulfur (S), and (L) is an aromatic carbonyl structure.

According to a fourth embodiment, in the third embodiment,
the (L) may be derived from compounds represented by Chemical Formulae 2 and 3 below: 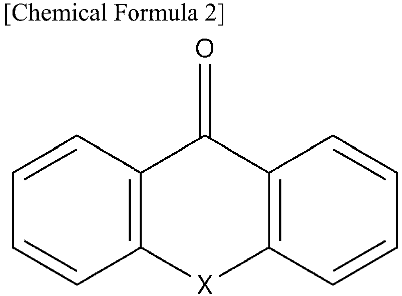
(wherein X is oxygen (O) or sulfur (S))

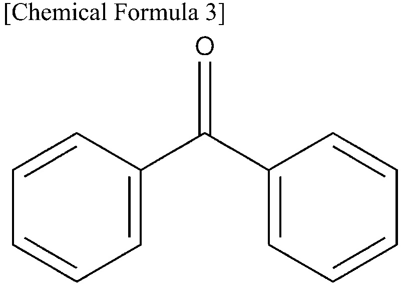

According to a fifth embodiment, in any one of the first embodiment to the fourth embodiment,
the hydrophilic photoinitiator may include compounds represented by Chemical Formulae 4 to 7 below: 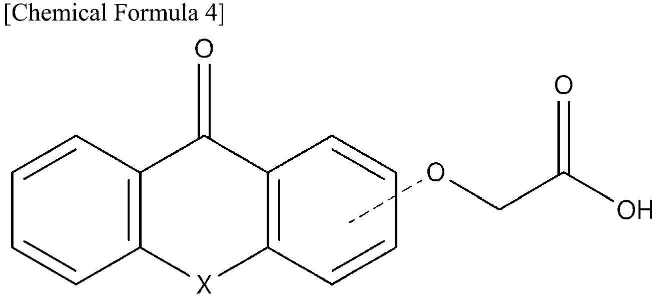 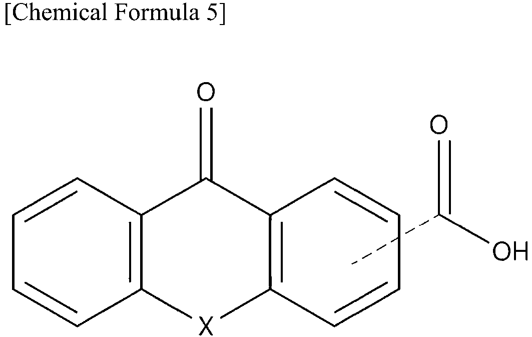 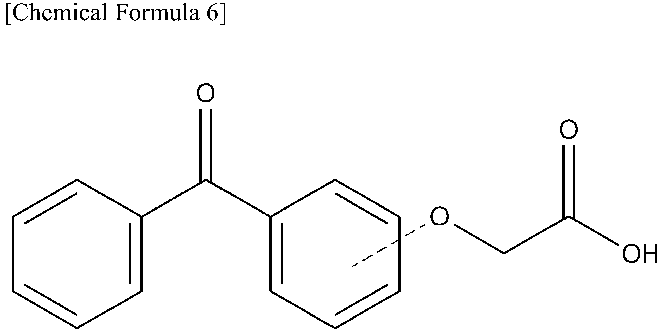 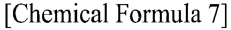 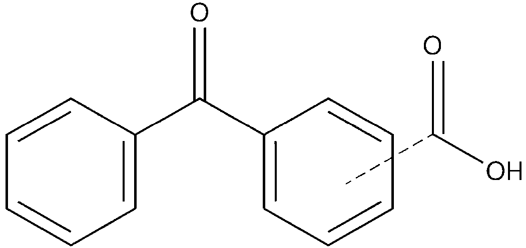
wherein X in Chemical Formulae 4 and 5 is each independently oxygen (O) or sulfur (S).

According to a sixth embodiment, in any one of the first embodiment to the fifth embodiment,
the polyethylene glycol containing a hydrophilic photoinitiator-derived functional group may be represented by Chemical Formula 8 below: 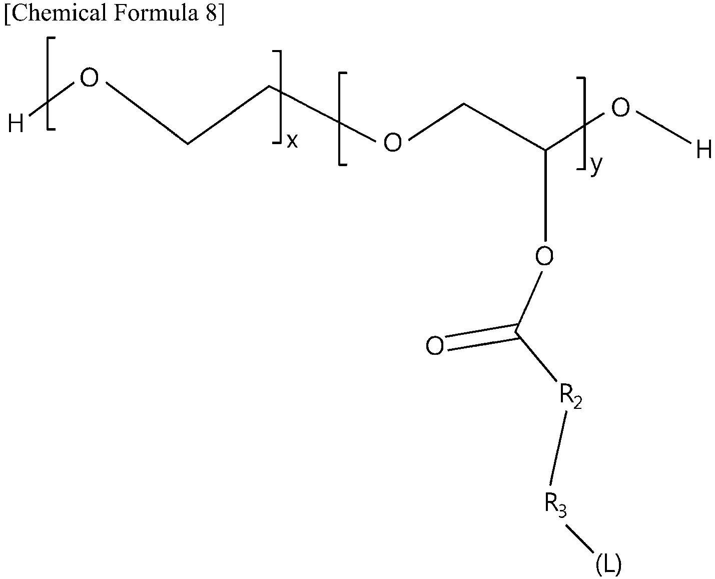
wherein x and y represent the mol% of each repeating unit, x is 95 to 99 mol%, and y is 1 to 5 mol%,
R₂ is a single bond, a linear or branched alkylene group having 1 to 10 carbon atoms, or an arylene group having 6 to 12 carbon atoms, R₃ is a single bond, oxygen (O), or sulfur (S), and (L) is an aromatic carbonyl structure.

According to a seventh embodiment, in any one of the first embodiment to the sixth embodiment,
the polyethylene glycol containing a hydrophilic photoinitiator-derived functional group may be represented by Chemical Formulae 9 to 12 below: 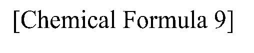 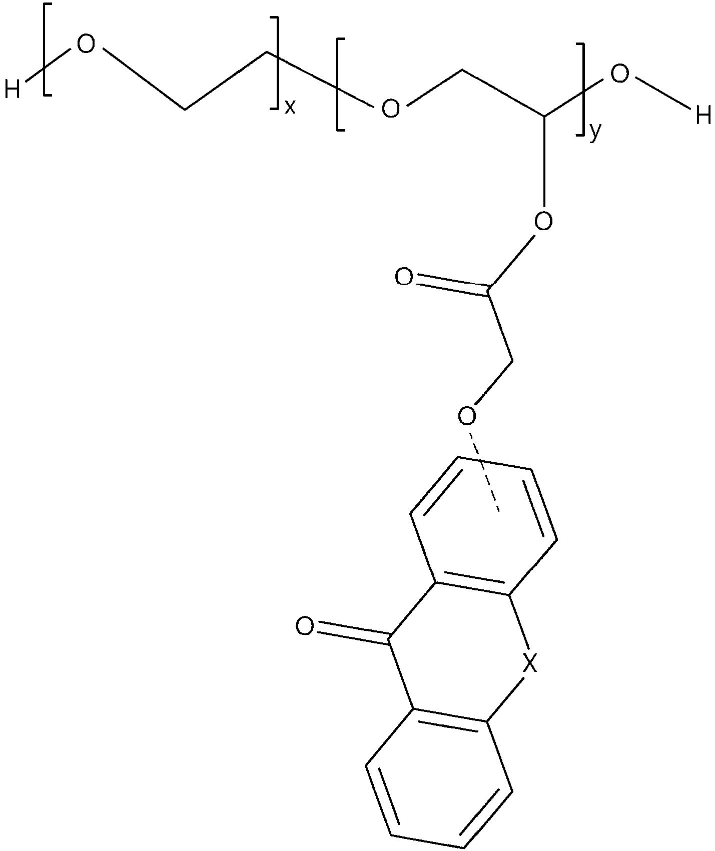
wherein x and y represent the mol% of each repeating unit, x is 95 to 99 mol%, y is 1 to 5 mol%, and X is each independently oxygen (O) or sulfur (S), 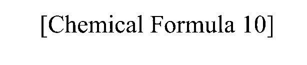 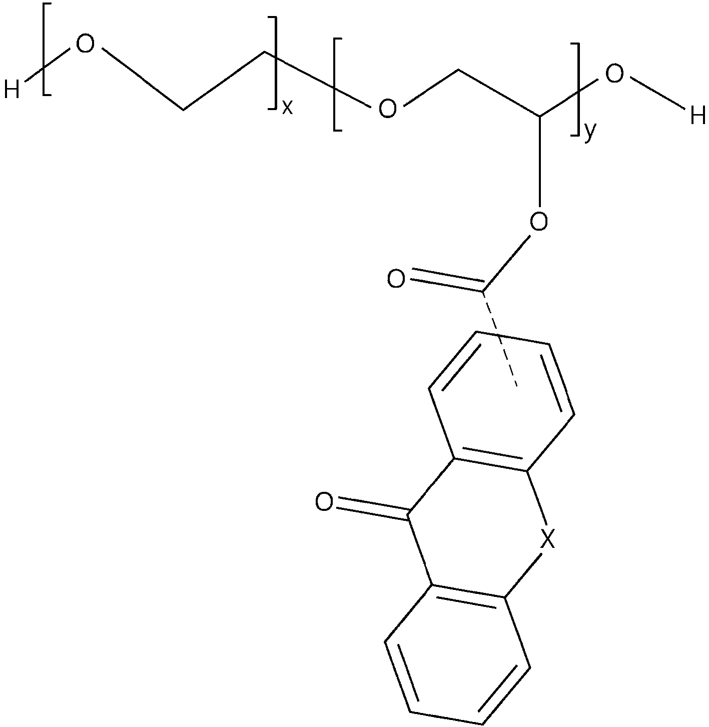
wherein x and y represent the mol% of each repeating unit, x is 95 to 99 mol%, y is 1 to 5 mol%, and X is each independently oxygen (O) or sulfur (S), 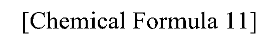 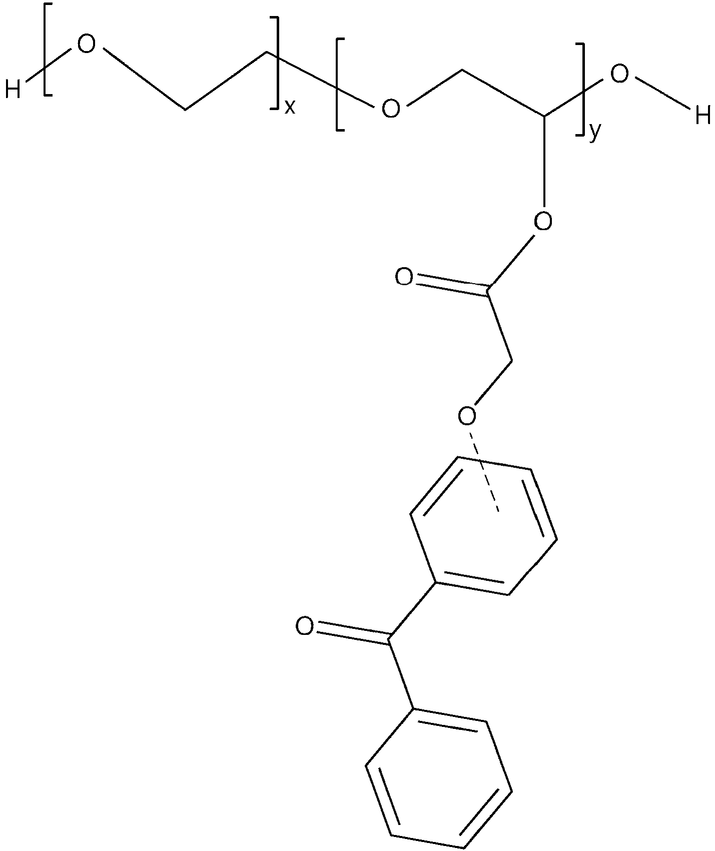
wherein x and y represent the mol% of each repeating unit, x is 95 to 99 mol%, and y is 1 to 5 mol%, 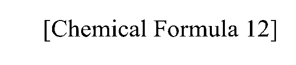 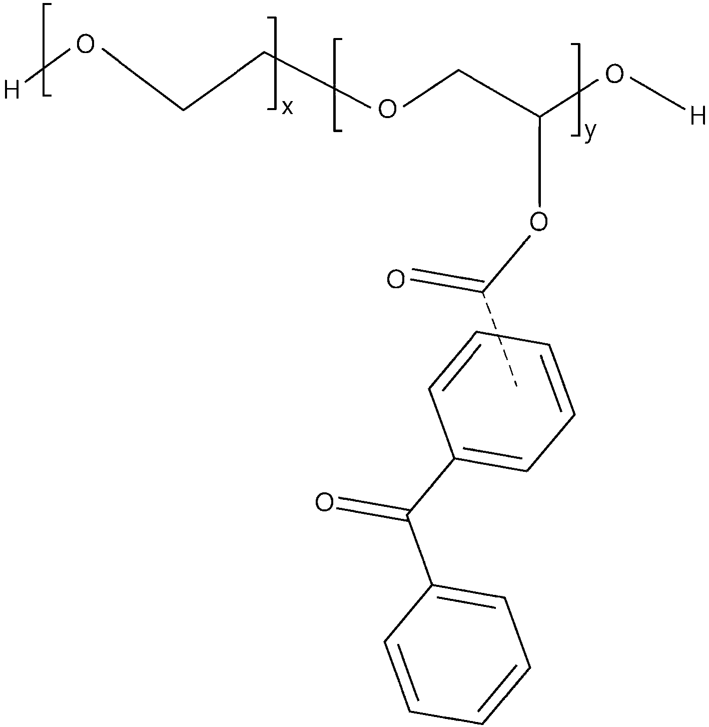
wherein x and y represent the mol% of each repeating unit, x is 95 to 99 mol%, and y is 1 to 5 mol%.

According to an eight embodiment, in any one of the first embodiment to the seventh embodiment,
the polyethylene glycol containing a hydrophilic photoinitiator-derived functional group may be represented by Chemical Formula 13 below: 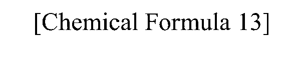 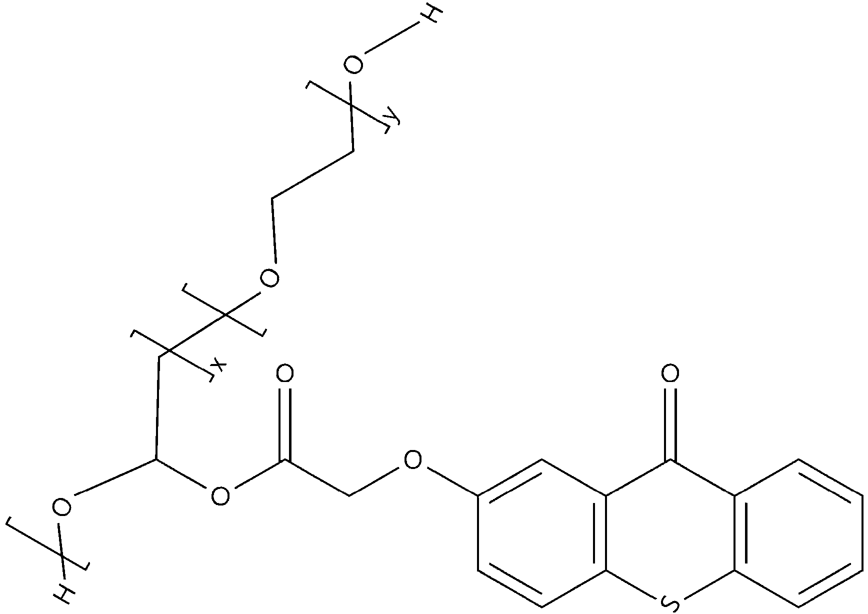
wherein x and y represent the mol% of each repeating unit, x is 1 to 5 mol%, and y is 95 to 99 mol%.

According to a ninth embodiment,
there is provided a lithium secondary battery including a positive electrode, a negative electrode, and a separator interposed between the positive electrode and the negative electrode,
wherein the separator is the separator according to any one of claims 1 to 8.

According to a tenth embodiment,
there is provided a method for manufacturing the separator of any one of the first embodiment to the ninth embodiments, the method including: applying and drying a composition including polyethylene glycol containing a hydrophilic photoinitiator-derived functional group and an aqueous dispersion medium on at least one surface of an olefin polymer porous support; and
irradiating ultraviolet rays to the olefin polymer porous support to which the composition has been applied and dried.

According to an eleventh embodiment, in the tenth embodiment,
in the irradiating of the ultraviolet rays, an ultraviolet irradiation dose may be 10 mJ/cm² or more and 20,000 mJ/cm² or less.

### Advantageous Effects

The separator according to one embodiment of the present disclosure is formed by applying a composition including polyethylene glycol containing a hydrophilic photoinitiator-derived functional group on at least one surface of an olefin polymer porous support, wherein, during the application process of the composition, the polyethylene glycol containing a hydrophilic photoinitiator-derived functional group is also included within pores of the olefin polymer porous support. In this regard, since the polyethylene glycol portion in the polyethylene glycol containing a hydrophilic photoinitiator-derived functional group has high affinity with an electrolyte, the separator according to one embodiment of the present disclosure can exhibit electrolyte impregnation properties that are significantly improved compared to the olefin polymer porous support alone.

Furthermore, since the polyethylene glycol containing a hydrophilic photoinitiator-derived functional group is relatively nonpolar compared to an aqueous dispersion medium (e.g., water) and has a structure in which a hydrophilic photoinitiator-derived functional group is introduced into polyethylene glycol having a high affinity with an olefin polymer, as a result of coating a composition including polyethylene glycol containing a hydrophilic photoinitiator-derived functional group and an aqueous dispersion medium on at least one surface of an olefin polymer porous support, the hydrophilic photoinitiator-derived functional group is evenly penetrated into the pores of the olefin polymer porous support, so that a dense crosslinked structure is formed between the fibrils of the olefin polymers of the porous support with a low ultraviolet exposure dose, thereby providing a separator having a high breaking temperature.

### Description of Drawings

The following drawing attached to this specification illustrates preferred embodiments of the present disclosure, and serves to further understand the technical idea of the present disclosure together with the contents of the disclosure described above, so the present disclosure should not be interpreted as being limited to the matters described in such a drawing.

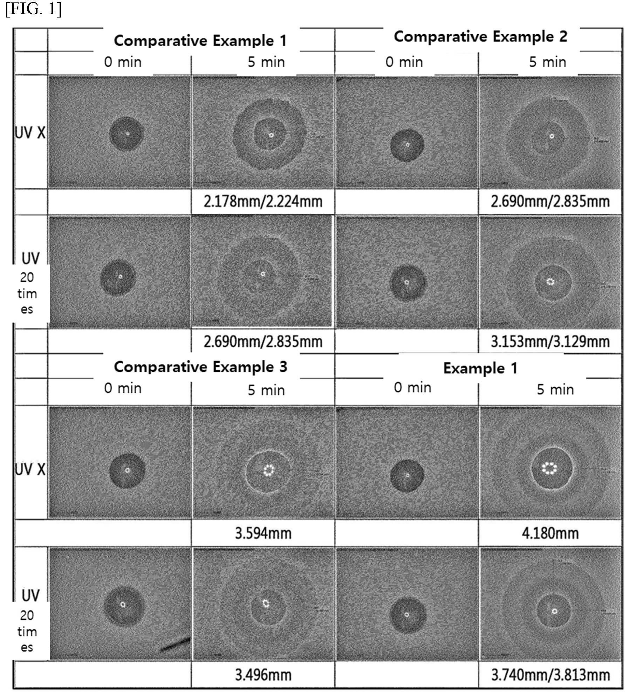

FIG. 1 is a photograph showing the results of evaluating electrolyte impregnation properties of separators manufactured in Example 1 and Comparative Examples 1 to 3.

### Mode for Invention

Hereinafter, the present disclosure will be described in detail. Prior to this, the terms or words used in the specification and claims of the present application should not be construed as being limited to their ordinary or dictionary meanings, but should be interpreted as meanings and concepts consistent with the technical spirit of the present disclosure, based on the principle that the inventor may adequately define the concepts of terms to best describe his/her disclosure. Therefore, it should be understood that the configurations described in the embodiments set forth in the specification are only one of the most preferred embodiments of the present disclosure and do not represent the entire technical concept of the present disclosure, and thus, various equivalents and modifications may be substituted for them at the time of filing this application.

The terms used in the specification are used only to describe exemplary embodiments, and are not intended to limit the present disclosure. Singular expressions include plural expressions unless the context clearly implies otherwise.

Throughout the specification, when a part is described as "comprising" or "including" a certain component, it means that other components may be further comprised or included, rather than excluded, unless otherwise stated.

Throughout the specification, the phrase "A and/or B" means "A, B, or both A and B."

Throughout the specification, the terms "about" and "substantially" are used to mean a numerical value or a value close to that numerical value when manufacturing and material tolerances inherent to the stated value are presented, and are used to prevent unscrupulous infringers from unfairly exploiting the disclosure in which exact or absolute numerical values are mentioned to aid understanding of the present disclosure.

Throughout the specification, temperature refers to Celsius temperature, and the unit is °C, unless otherwise specified.

In the present disclosure, the term "alkylene group" refers to an alkyl group having two bonding positions, that is, a divalent group.

In the present disclosure, the term "arylene group" refers to an aryl group having two bonding positions, that is, a divalent group.

An aqueous dispersion medium is advantageous in that it is environmentally friendly and inexpensive. Organic solvents widely used in the manufacture of separators have many environmental problems and thus require solvent recovery facilities or are subject to strict management and regulation. Accordingly, many attempts are being made to utilize such aqueous dispersion media as substitutes for organic solvents.

Meanwhile, in order to photocrosslink polymer chains within an olefin polymer porous support, a method has been proposed in which a composition containing a co-initiator is coated on at least one surface of the olefin polymer porous support to crosslink olefin polymer chains in the porous support. To this end, the photoinitiator needs to be sufficiently dissolved in the solvent and introduced in a sufficient amount to crosslink the polymer chains on the surface of the olefin polymer porous support.

However, the photoinitiator commonly used to crosslink polymer chains within an olefin polymer porous support is readily soluble in organic solvents but exhibits very low solubility in aqueous dispersion media. As a result, when an aqueous dispersion medium is used, there is a problem in that not only cannot the photoinitiator be introduced in an amount sufficient to crosslink the polymer chains on the surface and inside the pores of the olefin polymer porous support, but also the photoinitiator is not penetrated evenly into the surface and inside the pores of the olefin polymer porous support.

Accordingly, the present inventors have developed a separator which uses a hydrophilic photoinitiator that can be dissolved or dispersed even in an aqueous dispersion medium and to which polyethylene glycol containing a hydrophilic photoinitiator-derived functional group is applied, wherein the polyethylene glycol has excellent affinity with an olefin polymer porous support and has the hydrophilic photoinitiator introduced as a functional group.

According to one aspect of the present disclosure, there is provided a separator including
an olefin polymer porous support,
wherein the olefin polymer porous support includes a plurality of fibrils and pores formed by the plurality of fibrils entangled with one another, polyolefin chains constituting the fibrils are directly crosslinked to each other, and
the olefin polymer porous support includes polyethylene glycol containing a hydrophilic photoinitiator-derived functional group.

### Polyethylene Glycol Containing a Hydrophilic Photoinitiator-Derived Functional Group

The separator according to the present disclosure has a crosslinked structure in which olefin polymer chains of a porous support are at least partially linked to each other. In addition, the crosslinked structure may also be observed between olefin polymer chains. In the present disclosure, the crosslinked structure may refer to all of structures formed either between different polymer chains or within the same polymer chain.

The separator according to one embodiment of the present disclosure uses polyethylene glycol containing a hydrophilic photoinitiator-derived functional group, whereby radicals can be generated in polymer chains within the olefin polymer porous support, thereby forming a crosslinked structure in which the polymer chains are directly linked to each other.

The polyethylene glycol containing a hydrophilic photoinitiator-derived functional group means that at least one of hydrogens in the repeating -CH₂CH₂O- unit of polyethylene glycol is eliminated, and that position is modified with a hydrophilic photoinitiator portion as a functional group via the functional group of the hydrophilic photoinitiator.

Compared to applying a composition separately including a hydrophilic photoinitiator and polyethylene glycol to an olefin polymer porous support, when a composition including polyethylene glycol containing a hydrophilic photoinitiator-derived functional group obtained by modifying the polyethylene glycol with a hydrophilic photoinitiator is applied to the olefin polymer porous support, a separator becomes polarized by the introduction of the hydrophilic photoinitiator-derived functional group, thereby allowing a relatively polar electrolyte or electrolyte solution to more readily penetrate, so that electrolyte impregnation properties of the separator can be significantly improved.

As used herein, the hydrophilic photoinitiator refers to a photoinitiator having hydrophilicity that can be dissolved or dispersed in an aqueous dispersion medium.

The hydrophilic photoinitiator can crosslink an olefin polymer porous support by itself without any other components such as a crosslinking agent, a co-initiator, or a synergist. As hydrogen atoms in the hydrophilic photoinitiator are removed through hydrogen abstraction by light absorption alone, the hydrophilic photoinitiator becomes a reactive compound. Such photoinitiator forms radicals in polymer chains within the olefin polymer porous support, rendering the polymer chains reactive, so that the polymer chains can be directly linked to each other and photocrosslinked. For example, the hydrogen abstraction by the photoinitiator is possible in a small amount of double bond structures or branch structures present in the olefin polymer, so that hydrogen atoms can be removed from the double bond structure or branch structure in the olefin polymer through the hydrogen abstraction only by light absorption, thereby forming radicals in the polymer chains.

In this regard, since the hydrophilic photoinitiator-derived functional group of the polyethylene glycol containing a hydrophilic photoinitiator-derived functional group serves to form radicals in the polymer chains within the olefin polymer porous support, the content of the hydrophilic photoinitiator plays a very important role in radical formation.

The hydrophilic photoinitiator may include an aromatic carbonyl compound having a hydrophilic group.

The hydrophilic photoinitiator may be represented by Chemical Formula 1 below:

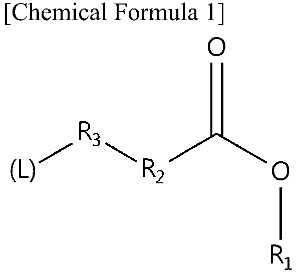

wherein R₁ is hydrogen, a linear or branched alkyl group having 1 to 10 carbon atoms, or an aryl group having 6 to 20 carbon atoms, R₂ is a single bond, a linear or branched alkylene group having 1 to 10 carbon atoms, or an arylene group having 6 to 12 carbon atoms, R₃ is a single bond, oxygen (O), or sulfur (S), and (L) is an aromatic carbonyl structure.

According to one embodiment of the present disclosure, in Chemical Formula 1 above, R₁ may be hydrogen, a linear or branched alkyl group having 1 to 5 carbon atoms, or an aryl group having 6 to 10 carbon atoms, R₂ may be a single bond, a linear or branched alkylene group having 1 to 5 carbon atoms, or an arylene group having 6 to 10 carbon atoms, R₃ may be a single bond, oxygen (O), or sulfur (S), and (L) may be an aromatic carbonyl structure.

According to one embodiment of the present disclosure, in Chemical Formula 1 above, R₁ may be hydrogen, or a linear or branched alkyl group having 1 to 3 carbon atoms, R₂ may be a single bond, or a linear or branched alkylene group having 1 to 3 carbon atoms, R₃ may be a single bond, oxygen (O), or sulfur (S), and (L) may be an aromatic carbonyl structure.

According to one embodiment of the present disclosure, in Chemical Formula 1 above, R₁ may be hydrogen, R₂ may be a single bond, or a linear or branched alkylene group having 1 to 3 carbon atoms, R₃ may be a single bond, oxygen (O), or sulfur (S), and (L) may be an aromatic carbonyl structure.

The (L) may be derived from compounds represented by Chemical Formulae 2 and 3 below: 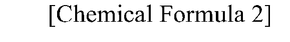 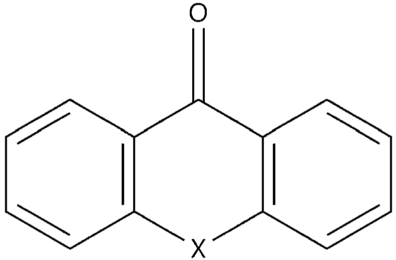 (wherein X is oxygen (O) or sulfur (S))

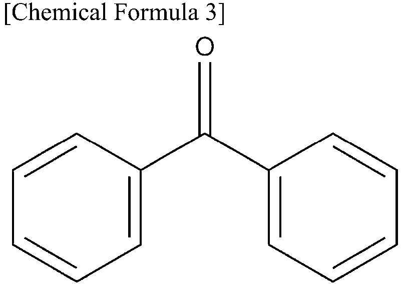

The hydrophilic photoinitiator may include compounds represented by Chemical Formulae 4 to 7 below:

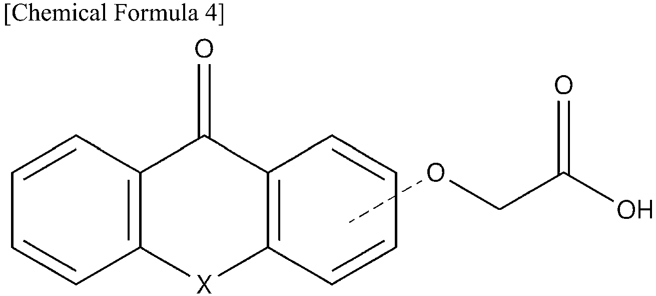

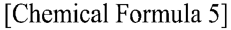

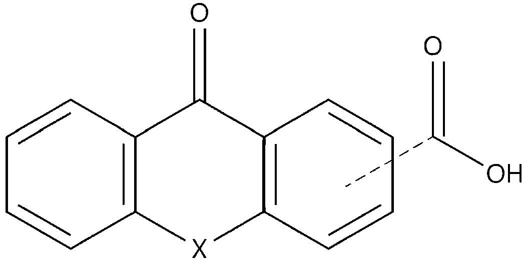

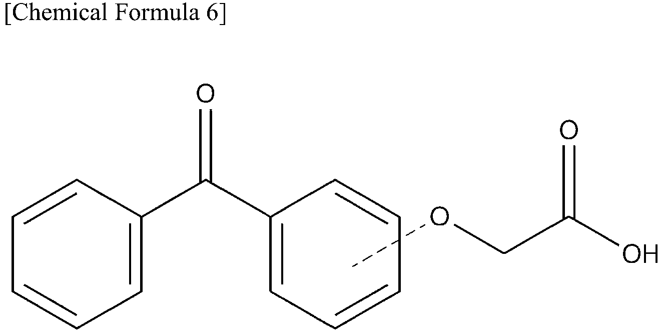

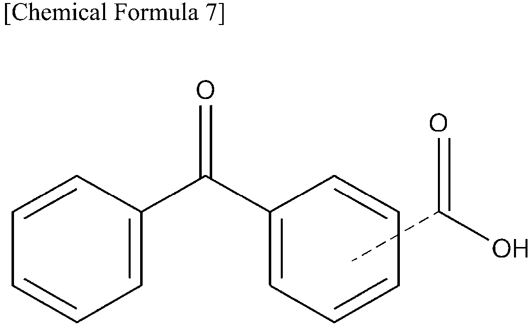

wherein X in Chemical Formulae 4 and 5 is each independently oxygen (O) or sulfur (S).

According to one embodiment of the present disclosure, the polyethylene glycol containing a hydrophilic photoinitiator-derived functional group may be represented by Chemical Formula 8 below:

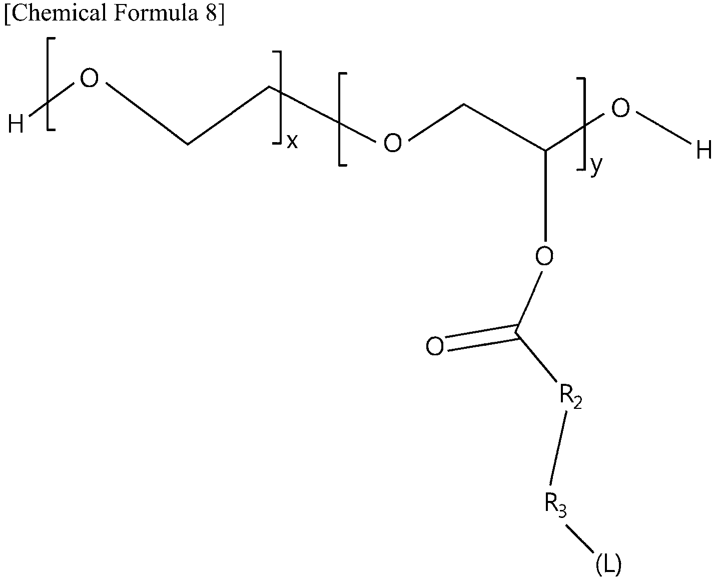

wherein x and y represent the mol% of each repeating unit, wherein x may be 95 to 99 mol%, or 96 to 98 mol%, and y may be 1 to 5 mol%, or 2 to 4 mol%. When the x and y satisfy these ranges, the electrolyte impregnation properties of the separator can be further improved when the polyethylene glycol containing the hydrophilic photoinitiator-derived functional group is applied, and the polymer modification reaction introducing the hydrophilic photoinitiator-derived functional group into the polyethylene glycol can proceed more efficiently.

In addition, R₂ may be a single bond, a linear or branched alkylene group having 1 to 10 carbon atoms, or an arylene group having 6 to 12 carbon atoms, R₃ may be a single bond, oxygen (O), or sulfur (S), and (L) may be an aromatic carbonyl structure.

In addition, the polyethylene glycol containing a hydrophilic photoinitiator-derived functional group may be represented by Chemical Formulae 9 to 12 below: 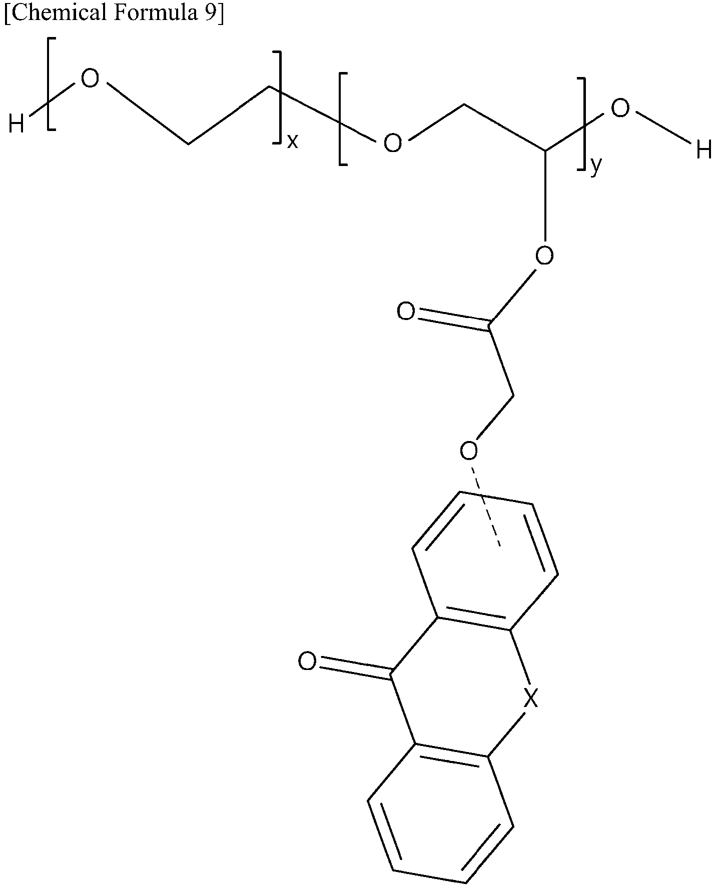 wherein x and y represent the mol% of each repeating unit, wherein x may be 95 to 99 mol%, or 96 to 98 mol%, and y may be 1 to 5 mol%, or 2 to 4 mol%, X may each independently be oxygen (O) or sulfur (S). 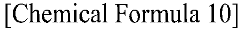 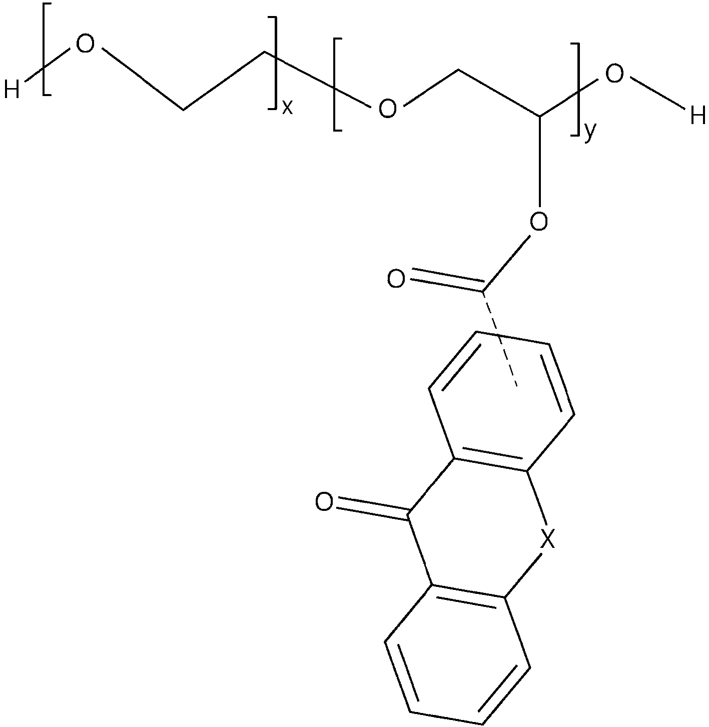 wherein x and y represent the mol% of each repeating unit, wherein x may be 95 to 99 mol%, or 96 to 98 mol%, and y may be 1 to 5 mol%, or 2 to 4 mol%, X may each independently be oxygen (O) or sulfur (S).

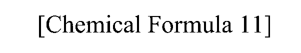

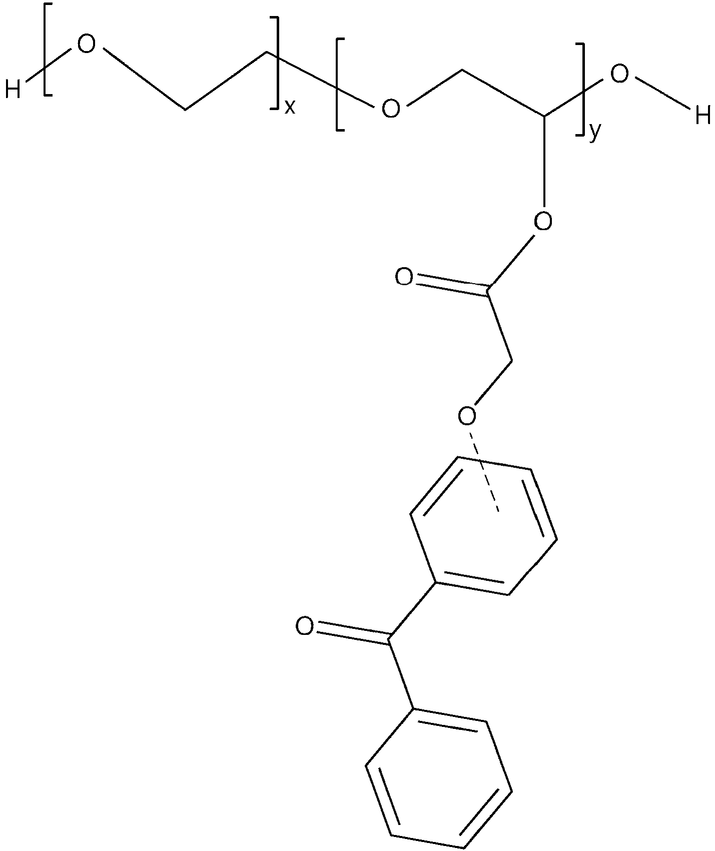

wherein x and y represent the mol% of each repeating unit, wherein x may be 95 to 99 mol%, or 96 to 98 mol%, and y may be 1 to 5 mol%, or 2 to 4 mol%. 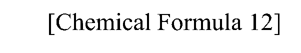 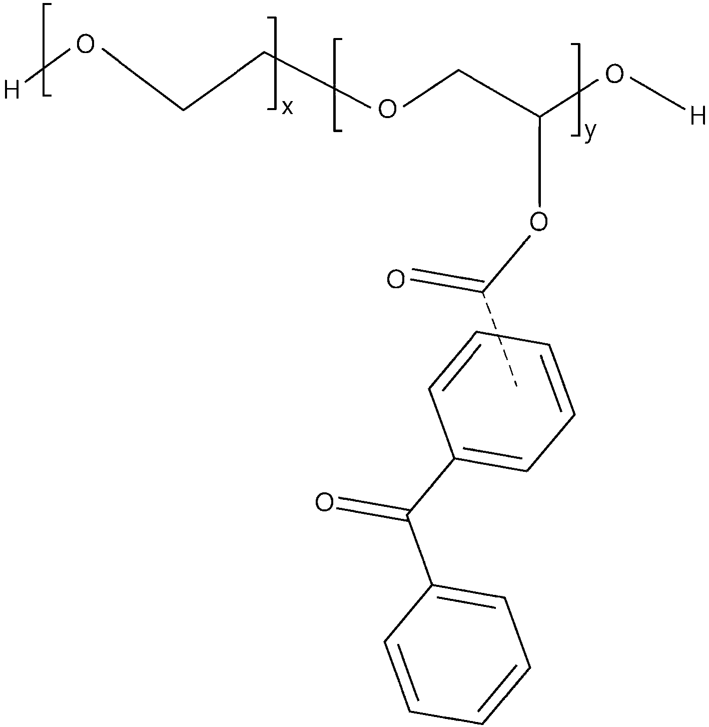 wherein x and y represent the mol% of each repeating unit, wherein x may be 95 to 99 mol%, or 96 to 98 mol%, and y may be 1 to 5 mol%, or 2 to 4 mol%.

According to one embodiment of the present disclosure, the polyethylene glycol containing a hydrophilic photoinitiator-derived functional group may be polyethylene glycol containing a 2-carboxymethoxythioxanthone-derived functional group represented by Chemical Formula 13 below: 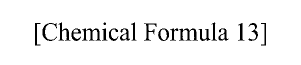 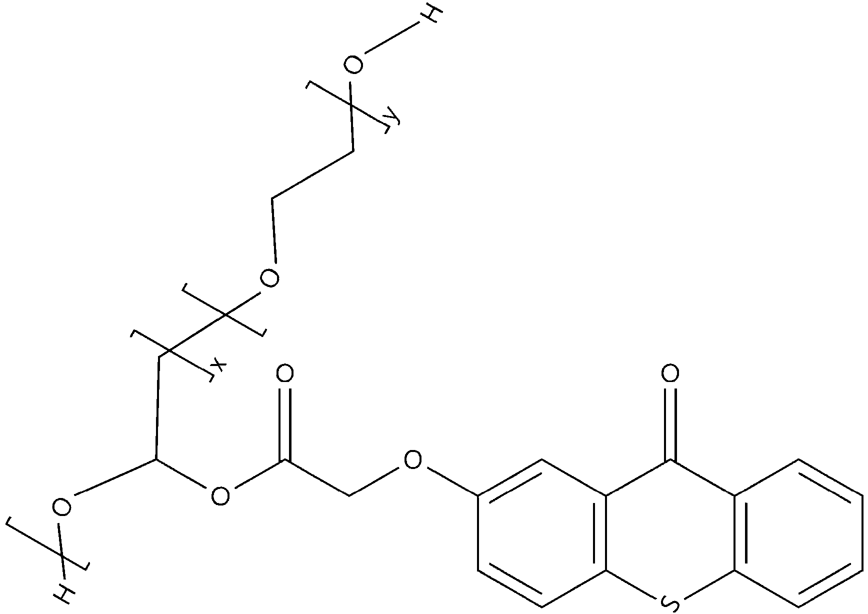 wherein x and y represent the mol% of each repeating unit, wherein x may be 1 to 5 mol%, or 2 to 4 mol%, and y may be 95 to 99 mol%, or 96 to 98 mol%.

According to one embodiment of the present disclosure, the polyethylene glycol containing a hydrophilic photoinitiator-derived functional group may be at least one of: a random copolymer in which two types of repeating units are randomly linked, an alternating copolymer in which two types of repeating units are alternately linked, and a block copolymer obtained by repeatedly forming blocks in which a plurality of one type of repeating units are linked to form a block, followed by linking a plurality of another type of repeating units to form another block.

Accordingly, as used herein, the polyethylene glycol containing a hydrophilic photoinitiator-derived functional group represented by Chemical Formulae 8 to 13 may also be at least one of the above-described random copolymer, alternating copolymer, or block copolymer.

The polyethylene glycol containing a hydrophilic photoinitiator-derived functional group is included in a composition together with an aqueous solvent as described below, and in the step of coating the composition on at least one surface of the olefin polymer porous support and then performing UV irradiation, the hydrophilic photoinitiator-derived functional group serves to initiate crosslinking. The hydrophilic photoinitiator-derived functional group can directly photocrosslink polymer chains in the olefin polymer porous support. Specifically, the hydrophilic photoinitiator-derived functional group can generate radicals in the polymer chains within the olefin polymer porous support, and form a crosslinked structure in which the polymer chains are directly linked to each other.

The polyethylene glycol containing a hydrophilic photoinitiator-derived functional group can be sufficiently dissolved in an aqueous dispersion medium, and may have a solubility of 0.01 g or more per 100 g of the aqueous dispersion medium. Accordingly, the polyethylene glycol containing a hydrophilic photoinitiator-derived functional group can be dissolved in the aqueous dispersion medium to an extent sufficient to crosslink polymer chains in the olefin polymer porous support.

The solubility may be measured using a UV-visible spectrophotometer. Specifically, the polyethylene glycol containing a hydrophilic photoinitiator-derived functional group is dissolved in a solvent to prepare solutions having various concentrations for which the mass concentrations are known in advance. After allowing the solutions to stand for 1 hour so that any undissolved polyethylene glycol containing a hydrophilic photoinitiator-derived functional group is precipitated or floated on the solvent, the absorbance of the solution is measured at a specific wavelength (for example, 550 nm). In a graph in which the x-axis represents concentration and the y-axis represents absorbance, the starting point at which the absorbance becomes constant and saturated may be defined as the solubility of the hydrophilic photoinitiator.

The content of the polyethylene glycol containing a hydrophilic photoinitiator-derived functional group in the separator may be controlled by preparing an aqueous dispersion medium composition including the polyethylene glycol containing a hydrophilic photoinitiator-derived functional group at a concentration of 0.1 wt% or more, 0.3 wt% or more, 0.5 wt% or more, or 1 wt% or more, or 10 wt% or less, 7 wt% or less, 5 wt% or less, 3 wt% or less, or 1 wt% or less, and applying and drying the composition on the olefin polymer porous support. When the content of the polyethylene glycol containing a hydrophilic photoinitiator-derived functional group is controlled in this manner, appropriate radical generation can increase the breaking temperature of the olefin polymer porous support itself and reduce the shrinkage rate of the separator, and electrolyte impregnation properties of the separator can be significantly improved due to the polyethylene glycol portion having affinity with an electrolyte.

In one embodiment of the present disclosure, after a composition including the polyethylene glycol containing a hydrophilic photoinitiator-derived functional group and an aqueous dispersion medium is applied on at least one surface of the olefin polymer porous support, the polyethylene glycol containing a hydrophilic photoinitiator-derived functional group is evenly penetrated into the surface and pores of the olefin polymer porous support, which is a crosslinking target. Thereafter, ultraviolet irradiation is performed so that polyolefin chains constituting a plurality of fibrils included in the olefin polymer porous support are directly crosslinked to each other, thereby providing a separator having a directly crosslinked structure.

In general, the olefin polymer porous support exhibits hydrophobicity, and thus, when a composition including a hydrophilic photoinitiator alone in an aqueous dispersion medium is applied on at least one surface of the olefin polymer porous support, there may be difficulty in allowing the hydrophilic photoinitiator to penetrate into the surface or pores of the olefin polymer porous support.

However, as a result of including, in the composition, the hydrophilic photoinitiator-derived functional group-containing polyethylene glycol in which a hydrophilic photoinitiator that serves to directly crosslink the olefin polymer porous support is introduced into polyethylene glycol, the polyethylene glycol has affinity with the olefin polymer porous support, so that the polyethylene glycol containing a hydrophilic photoinitiator-derived functional group can be evenly penetrated into pores of the olefin polymer porous support.

According to one embodiment of the present disclosure, the polyethylene glycol in the polyethylene glycol containing a hydrophilic photoinitiator-derived functional group may have a weight average molecular weight of 30,000 or less, or 100 to 20,000, or 200 to 15,000, or 300 to 10,000. When the weight average molecular weight of the polyethylene glycol satisfies these ranges, it can be more advantageous in terms of improving solubility of the hydrophilic photoinitiator in an aqueous dispersion medium and serving as a carrier that allows the hydrophilic photoinitiator to permeate into the surface and pores of the olefin polymer porous support.

The molecular weight (weight average molecular weight and number average molecular weight) of the polyethylene glycol may be measured through gel permeation chromatography (GPC). PL GPC220 from Agilent Technologies may be used, and the measurement conditions may be as follows:

Column (maker, model no.): PL aquagel-OH Guard 8um 50 x 7.5 mm
- Eluent : Water
- Temperature : 40°C
- Flow rate : 1.0 mL/min
- Injection volume, sample concentration: 30 µL, 1-10 mg/mL
- Standard : PEG/PEO
- Detector: RI

### Separator

A separator according to the present disclosure includes a crosslinked structure-containing olefin polymer porous support having a crosslinked structure in which polymer chains are directly linked to each other, and polyethylene glycol containing a hydrophilic photoinitiator-derived functional group. In addition to the above components, additives such as a surfactant and a dispersant may be further included.

The olefin polymer porous support includes a plurality of fibrils and pores formed by the plurality of fibrils entangled with one another, and polyolefin chains constituting the fibrils are directly crosslinked to each other.

In addition, the olefin polymer porous support includes polyethylene glycol containing a hydrophilic photoinitiator-derived functional group. Specifically, the polyethylene glycol containing a hydrophilic photoinitiator-derived functional group may be included on the surface and inside the pores of the olefin polymer porous support. As described below, when a composition including the polyethylene glycol containing a hydrophilic photoinitiator-derived functional group and an aqueous dispersion medium is applied on at least one surface of the olefin polymer porous support, since the polyethylene glycol has a high affinity with the olefin polymer porous support, the polyethylene glycol containing a hydrophilic photoinitiator-derived functional group is evenly penetrated into the pores through the surface of the olefin polymer porous support.

Here, the polyethylene glycol containing a hydrophilic photoinitiator-derived functional group included in the olefin polymer porous support may include all of the polyethylene glycol remaining in the form as introduced during preparation of the composition, as well as the polyethylene glycol remaining in the form of any derivative components or reaction products of the polyethylene glycol containing a hydrophilic photoinitiator-derived functional group, including a form in which the hydrophilic photoinitiator-derived functional group is radicalized according to an ultraviolet irradiation step described below, a form in which the radicalized functional group is transformed (for example, a form in which a radicalized carbonyl group is converted into an -OH group), and a form in which the radicalized hydrophilic photoinitiator-derived functional groups are dimerized with each other.

In addition, the olefin polymer porous support may further include additives such as a surfactant or a dispersant.

### Olefin Polymer Porous Support

The olefin polymer porous support includes a "crosslinked structure in which polymer chains are directly linked to each other."

As used herein, the expression "crosslinked structure in which polymer chains are directly linked to each other" refers to a state in which polymer chains substantially composed of an olefin polymer, more preferably polymer chains composed solely of an olefin polymer, are directly crosslinked to each other. Specifically, the polyethylene glycol containing a hydrophilic photoinitiator-derived functional group included in the composition is evenly penetrated into the surface and pores of the olefin polymer porous support, and then the hydrophilic photoinitiator-derived functional group portion of the polyethylene glycol is radicalized by ultraviolet irradiation. As hydrogen of the olefin polymer chain is removed by the radicalized hydrophilic photoinitiator-derived functional group, the olefin polymers are also radicalized, and the radicalized olefin polymers become reactive and form crosslinks in a form in which they are directly linked to each other.

Therefore, a crosslinking reaction occurring between crosslinking agents when an additional crosslinking agent is added in addition to the above polyethylene glycol containing a hydrophilic photoinitiator-derived functional group does not correspond to the "crosslinked structure in which polymer chains are directly linked to each other" as referred to in the present disclosure. Furthermore, a crosslinking reaction occurring between an additional crosslinking agent and the polymer chain does not correspond to the "crosslinked structure in which polymer chains are directly linked to each other" as referred to in the present disclosure, even if the polymer chain is substantially composed of an olefin polymer or is composed solely of an olefin polymer.

The separator according to one embodiment of the present disclosure can exhibit improved heat resistance by including the crosslinked structure-containing olefin polymer porous support having a crosslinked structure in which polymer chains are directly linked to each other.

In one embodiment of the present disclosure, the degree of crosslinking of the crosslinked structure-containing olefin polymer porous support may be 10% to 80%, or 30% to 55%, or 10% to 45%, or 15% to 40%, or 20% to 35%. When the crosslinked structure-containing olefin polymer porous support has a degree of crosslinking within the above-described range, it is possible to achieve a desired level of heat resistance, while also making it easier to increase the modulus.

In this case, the crosslinked structure-containing olefin polymer porous support is physically confined in a metal mesh and immersed in trichlorobenzene at 135°C, followed by stirring for 20 hours, and then taken out and completely dried. Then, the weight of the completely dried olefin polymer porous support is measured, and the degree of crosslinking may be calculated as a percentage of the weight of the remaining olefin polymer porous support relative to the initial weight.

In one embodiment of the present disclosure, the olefin polymer porous support may be a porous film.

The olefin polymer may include an ethylene polymer; a propylene polymer; a butylene polymer; a pentene polymer; a hexene polymer; an octene polymer; a copolymer of two or more of ethylene, propylene, butene, pentene, 4-methylpentene, hexene, and octene; or a mixture thereof.

Non-limiting examples of the ethylene polymer include low-density polyethylene (LDPE), linear low-density polyethylene (LLDPE), and high-density polyethylene (HDPE). When the ethylene polymer is a high-density polyethylene having a high crystallinity and a high melting point of the resin, it is possible to achieve a desired level of heat resistance, while also making it easier to increase the modulus.

The separator according to one embodiment of the present disclosure can exhibit excellent heat resistance without sacrificing other properties of the olefin polymer porous support by including the crosslinked structure-containing olefin polymer porous support.

### Surfactant

In one embodiment of the present disclosure, if necessary, the separator may include a surfactant. A surfactant may be added to a composition including the polyethylene glycol containing a hydrophilic photoinitiator-derived functional group and an aqueous dispersion medium on the olefin polymer porous support, and as a result, the separator may include the surfactant.

The surfactant can improve dispersibility of solid components in the composition. In addition, as described below, the surfactant can enhance the separator wettability of the composition including an aqueous dispersion medium, thereby preventing a dewetting phenomenon, that is, a phenomenon in which the composition fails to be uniformly coated on the surface of the olefin polymer porous support due to a difference in surface energy between the olefin polymer porous support and the aqueous dispersion medium and instead beads up like water droplets, and thus enabling effective coating of fibrils.

As the surfactant, any surfactant may be used without limitation, as long as it does not degrade battery performance. Non-limiting examples thereof may include fluorine-based surfactants and sulfur-based surfactants. The fluorine-based surfactant serves to improve coating properties by lowering surface tension, and any surfactant commonly used in the art may be used. Preferably, a fluoroaliphatic polymeric ester may be used, and specific examples thereof may include 3M's FC4430, Novec's 4300, and DuPont's Capstone. In addition, the sulfur-based surfactant may include BASF's WE3475.

In one embodiment of the present disclosure, the separator may further include additives such as a dispersant and/or a thickener. The additives may include hydroxyethyl cellulose (HEC), hydroxypropyl cellulose (HPC), ethylhydroxyethyl cellulose (EHEC), methylcellulose (MC), carboxymethyl cellulose (CMC), hydroxyalkyl methyl cellulose, cyanoethylene polyvinyl alcohol, or two or more thereof.

### Method for Manufacturing Separator

A method for manufacturing a separator according to one embodiment of the present disclosure includes the steps of: applying and drying a composition including polyethylene glycol containing a hydrophilic photoinitiator-derived functional group and an aqueous dispersion medium on at least one surface of an olefin polymer porous support; and
irradiating ultraviolet rays to the olefin polymer porous support to which the composition has been applied and dried.

Hereinafter, the method for manufacturing a separator according to one embodiment of the present disclosure will be described with a focus on the main parts.

First, a composition including polyethylene glycol containing a hydrophilic photoinitiator-derived functional group and an aqueous dispersion medium is prepared, and then coated on at least one surface of an olefin polymer porous support. The composition may further include additives such as surfactants and dispersants.

The aqueous dispersion medium is advantageous in that it is environmentally friendly and does not require excessive heat for drying. Depending on the type of the binder polymer, the aqueous dispersion medium may act as a solvent that dissolves the binder polymer or as a dispersion medium that disperses the binder polymer without dissolving it. For example, the aqueous dispersion medium may include water, methanol, ethanol, ethylene glycol, diethylene glycol, glycerol alcohol, or two or more thereof. In particular, the aqueous dispersion medium may include water.

Non-limiting examples of a method for applying the composition on the olefin polymer porous support include dip coating, die coating, roll coating, comma coating, microgravure coating, doctor blade coating, reverse roll coating, and direct roll coating.

By coating the composition on the olefin polymer porous support, the polyethylene glycol containing a hydrophilic photoinitiator-derived functional group can be introduced to the surface of the olefin polymer porous support, and the olefin polymer porous support can be crosslinked upon irradiation with ultraviolet rays. Here, the "surface of the olefin polymer porous support" may include not only the surface of the outermost layer of the olefin polymer porous support, but also the surface of the pores existing inside the olefin polymer porous support.

The content of the polyethylene glycol containing a hydrophilic photoinitiator-derived functional group in the separator may be controlled by preparing an aqueous dispersion medium composition including the polyethylene glycol containing a hydrophilic photoinitiator-derived functional group at a concentration of 0.1 wt% or more, 0.3 wt% or more, 0.5 wt% or more, or 1 wt% or more, or 10 wt% or less, 7 wt% or less, 5 wt% or less, 3 wt% or less, or 1 wt% or less, and applying and drying the composition on the olefin polymer porous support. When the content of the polyethylene glycol containing a hydrophilic photoinitiator-derived functional group is controlled in this manner, appropriate radical generation can increase the breaking temperature of the olefin polymer porous support itself and reduce the shrinkage rate of the separator, and electrolyte impregnation properties of the separator can be significantly improved due to the polyethylene glycol portion having affinity with an electrolyte.

According to one embodiment of the present disclosure, the polyethylene glycol containing a hydrophilic photoinitiator-derived functional group may be obtained by a process including: preparing a composition by stirring a hydrophilic photoinitiator, polyethylene glycol, a coupling agent, and a solvent under a nitrogen atmosphere, reacting the composition by heat treatment, cooling the composition after completion of the reaction, precipitating a reaction product in a pre-prepared solvent, and removing a residual solvent after completion of precipitation.

Specifically, as the coupling agent, 5.5 mmol of tert-butyl hydroperoxide (TBHP), tetrabutylammonium iodide (TBAI), or the like may be used, and as the solvent, any solvent capable of dissolving the hydrophilic photoinitiator and polyethylene glycol may be applied, and for example, ethyl acetate, dimethylformamide, dimethyl sulfoxide, etc. may be used. In addition, a mixed solvent obtained by mixing two or more solvents may be used, and a mixed solvent of ethyl acetate and dimethylformamide may be used.

In addition, the composition may be prepared by stirring the hydrophilic photoinitiator, polyethylene glycol, a reaction catalyst, and a solvent at room temperature for 1 minute to 10 minutes under a nitrogen atmosphere. Then, a reaction may be carried out at 70°C to 90°C for 1 hour to 10 hours, and after completion of the reaction, the reaction product may be cooled to room temperature and then precipitated in a solvent. Further, after completion of precipitation, a residual solvent may be removed using an evaporator, a vacuum drying oven, or the like at 30°C to 50°C for 5 hours to 20 hours.

Next, the method includes a step of irradiating ultraviolet rays to the olefin polymer porous support coated with the composition.

As ultraviolet rays are irradiated, the polymer chains within the olefin polymer porous support can be crosslinked, thereby obtaining an olefin polymer porous support containing a crosslinked structure.

The ultraviolet irradiation may be performed by using an ultraviolet crosslinking device, and by appropriately adjusting the ultraviolet irradiation time and dose in consideration of the content ratio of the hydrophilic photoinitiator-derived functional group of the polyethylene glycol containing a hydrophilic photoinitiator-derived functional group. For example, the ultraviolet irradiation time and dose may be set to conditions such that the polymer chains within the olefin polymer porous support are sufficiently crosslinked to achieve the desired heat resistance, while preventing damage to the separator caused by heat generated from the ultraviolet lamp. In addition, the ultraviolet lamp used in the ultraviolet crosslinking device may be appropriately selected from a high-pressure mercury lamp, a metal lamp, a gallium lamp, etc. depending on the hydrophilic photoinitiator used, and the emission wavelength and capacity of the ultraviolet lamp may be appropriately selected according to the process.

The method for manufacturing a separator according to one embodiment of the present disclosure can photocrosslink polymer chains within the olefin polymer porous support using an ultraviolet irradiation dose significantly lower than that generally used for photocrosslinking, thereby increasing the applicability of a mass production process for separators.

In one embodiment of the present disclosure, the ultraviolet irradiation dose may be in a range of 10 mJ/cm² or more, 50 mJ/cm² or more, 100 mJ/cm² or more, 500 mJ/cm² or more, 1,000 mJ/cm² or more, 2,000 mJ/cm² or more, or 5,000 mJ/cm² or more, and 20,000 mJ/cm² or less, 15,000 mJ/cm² or less, or 11,600 mJ/cm² or less. When the ultraviolet irradiation dose satisfies the above range, polymer chains within the olefin polymer porous support can be sufficiently crosslinked, thereby enhancing heat resistance.

The ultraviolet irradiation dose may be measured using a portable light meter, called Miltec's H type UV bulb and UV power puck. When measuring the dose using Miltec's H type UV bulb, three types of wavelength values, UVA, UVB, and UVC, are obtained depending on wavelength, and the ultraviolet rays according to the present disclosure correspond to UVA.

In the method for measuring the ultraviolet irradiation dose in the present disclosure, the UV Power Puck is passed under the light source on a conveyor under the same conditions as the sample, and the ultraviolet dose value displayed on the UV Power Puck at this time is referred to as the 'ultraviolet irradiation dose'.

The separator according to one embodiment of the present disclosure may have a breaking temperature of 150°C or higher. The breaking temperature of the separator may be increased compared to that of a separator including a non-crosslinked porous polyolefin substrate. For example, the breaking temperature of the separator may be 150°C or more, 160°C or more, 170°C or more, 180°C or more, 190°C or more, or 200°C or more.

According to one embodiment of the present disclosure, the breaking temperature of the separator may be measured by mounting a separator sample of 5.0 mm in width x 40 mm in length on a TMA device (TA Instrument, Q400) using a jig, exposing the sample to a temperature-increasing condition (starting at room temperature, increasing at a rate of 5°C/min) while applying a tension of 0.01 N, and measuring a temperature at which the sample breaks after the length of the sample changes and then increases rapidly as the temperature increases.

### Lithium Secondary Battery

A lithium secondary battery according to one embodiment of the present disclosure includes a positive electrode, a negative electrode, and a separator interposed between the positive electrode and the negative electrode, wherein the separator may include the separator as described above.

The lithium secondary battery may have various shapes, such as cylindrical, prismatic, or pouch shape.

The lithium secondary battery may include a lithium metal secondary battery, a lithium-ion secondary battery, a lithium polymer secondary battery, a lithium-ion polymer secondary battery, or the like.

The electrodes to be applied to the present disclosure are not particularly limited, and may be manufactured in a form in which electrode active materials are bonded to electrode current collectors according to conventional methods known in the art.

Non-limiting examples of the positive electrode active material among the electrode active materials may include conventional positive electrode active materials used in the positive electrodes of conventional lithium secondary batteries, particularly lithium manganese oxide, lithium cobalt oxide, lithium nickel oxide, lithium iron oxide, or lithium composite oxides combining these.

Non-limiting examples of the negative electrode active material among the electrode active materials may include conventional negative electrode active materials used in the negative electrodes of conventional lithium secondary batteries, particularly lithium-adsorbing materials such as lithium metal or lithium alloys, carbon, petroleum coke, activated carbon, graphite, or other carbons.

Non-limiting examples of the positive electrode current collector include foils made of aluminum, nickel, or a combination thereof, and non-limiting examples of the negative electrode current collector include foils made of copper, gold, nickel, copper alloys, or combinations thereof.

In one embodiment of the present disclosure, the lithium secondary battery may include an electrolyte, wherein the electrolyte may include a lithium salt and an organic solvent for dissolving the lithium salt. Additionally, an organic solid electrolyte, an inorganic solid electrolyte, or the like may be used as the electrolyte.

The lithium salt may be any lithium salt conventionally used in the electrolyte for secondary batteries without limitation. For example, the anion of the lithium salt may include F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, or a mixture of two or more thereof.

The organic solvent included in the electrolyte may be any conventionally used solvent without limitation, and representative examples may include propylene carbonate, ethylene carbonate, diethyl carbonate, dimethyl carbonate, ethyl methyl carbonate, methyl propyl carbonate, dipropyl carbonate, dimethyl sulfoxide, acetonitrile, dimethoxyethane, diethoxyethane, vinylene carbonate, sulfolane, gamma-butyrolactone, propylene sulfite, tetrahydrofuran, or a mixture thereof.

In addition, for the purpose of improving charge/discharge characteristics, flame retardancy, etc., for example, pyridine, triethyl phosphate, triethanolamine, cyclic ethers, ethylenediamine, n-glyme, hexa-phosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxyethanol, aluminum trichloride, etc. may be added to the electrolyte. In certain cases, halogen-containing solvents such as carbon tetrachloride or trifluoroethylene may be additionally included to impart nonflammability, and carbon dioxide gas may be further included to improve high-temperature preservation properties.

As the organic solid electrolyte, for example, polyethylene derivatives, polyethylene oxide derivatives, polypropylene oxide derivatives, phosphate ester polymers, poly-agitation lysine, polyester sulfides, polyvinyl alcohol, polyvinylidene fluoride, polymers containing ionic dissociable groups, etc. may be used.

As the inorganic solid electrolyte, for example, nitrides, halides, sulfates, etc. of Li, such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, Li₃PO₄-Li₂S-SiS₂, etc. may be used.

The injection of the electrolyte may be carried out at an appropriate step during the battery manufacturing process according to the manufacturing process of the final product and the required properties. That is, it may be applied before battery assembly or at the final stage of battery assembly.

Hereinafter, the present disclosure will be described in detail by way of examples. However, the examples according to the present disclosure may be modified in various different forms, and the scope of the present disclosure is not construed as being limited to the following examples. The examples of the present disclosure are provided to explain the present disclosure more completely to those skilled in the art.

### EXAMPLES

### Example 1

### (1) Synthesis of Polyethylene Glycol Containing a Hydrophilic Photoinitiator-Derived Functional Group (CMTX-PEG)

1.25 mmol of 2-carboxymethoxythioxanthone (CMTX), 25 mmol of polyethylene glycol 10000 (weight average molecular weight: 10,000), 5.5 mmol of tert-butyl hydroperoxide (TBHP), 0.25 mmol of tetrabutylammonium iodide (TBAI), and 5 mL of a mixed solvent of ethyl acetate/DMF (volume ratio: 4/1) were added and stirred for 5 minutes at room temperature under a nitrogen atmosphere. Then, the reaction was carried out at 80°C for 5 hours. After completion of the reaction, the reaction product was cooled to room temperature and then precipitated in 50 mL of ether solvent prepared in advance. The precipitation process was repeated three times. After completion of the precipitation, residual solvent was removed using a vacuum drying oven at 40°C for 12 hours, thereby producing polyethylene glycol containing a hydrophilic photoinitiator-derived functional group (CMTX-PEG) represented by Chemical Formula 13 below, that is, polyethylene glycol containing a 2-carboxymethoxythioxanthone-derived functional group.

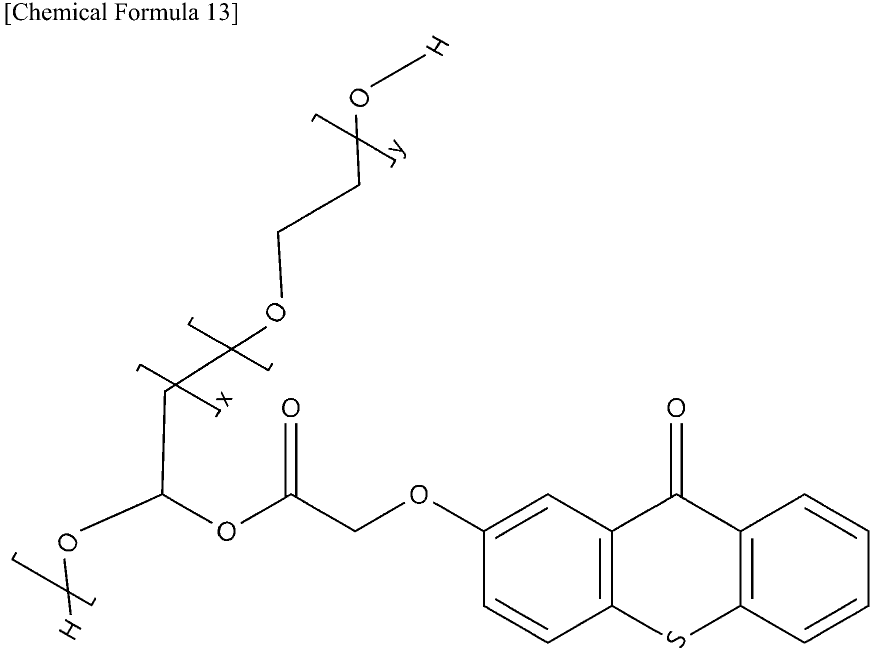

In the polyethylene glycol containing a hydrophilic photoinitiator-derived functional group represented by Chemical Formula 13, the content of the hydrophilic photoinitiator-derived functional group, that is, the content x of repeating units containing the hydrophilic photoinitiator-derived functional group, was 2.86 mol%, and the content y of repeating units not containing the hydrophilic photoinitiator-derived functional group was 97.14 mol%.

Here, the mol% of x and y was confirmed using an analytical instrument, Bruker Avance III HD 500 MHz NMR by dissolving the sample in a trichloromethane solvent (CDCl₃), measuring the NMR 1H spectrum at room temperature, and scanning 16 times or more.

### (2) Manufacturing of a Separator

The produced polyethylene glycol containing a hydrophilic photoinitiator-derived functional group (CMTX-PEG) was mixed with water, which is an aqueous dispersion medium, to prepare a composition (1 wt% aqueous solution).

The composition was applied to both surfaces of a polyethylene porous film (thickness: about 11 µm, porosity: about 42.5%, product name: SW811G, manufacturer: SENIOR) using a Mayer bar, and then dried using a Mathis oven at a temperature of 60°C. An exposure device (Miltec HPI UV exposure device) and a lamp (Miltec Arc lamp) were prepared to irradiate the porous film coated with the composition with ultraviolet rays of UV-A 20 times at an irradiation dose of 580 mJ/cm² to achieve a total irradiation dose of 11,600 mJ/cm² and at a UV irradiation intensity of 50% of the UV light source, thereby manufacturing a separator.

### Comparative Example 1

A polyethylene porous film (thickness: 11 µm, porosity: about 42.5%, product name: SW811G, manufacturer: SENIOR) was used as a separator.

### Comparative Example 2

A separator was manufactured in the same manner as in Example 1, except that, instead of the composition of Example 1, a composition (1 wt% aqueous solution) prepared by mixing polyethylene glycol 10000 (weight average molecular weight: 10,000) with water as an aqueous dispersion medium was used.

### Comparative Example 3

A separator was manufactured in the same manner as in Example 1, except that, instead of the composition of Example 1, a composition (1 wt% aqueous solution) prepared by mixing polyethylene glycol 10000 (weight average molecular weight: 10,000) and 2-carboxymethoxythioxanthone (CMTX) in a weight ratio of 4:1 in water as an aqueous dispersion medium was used.

### Measurement of Molecular Weight

The molecular weight (weight average molecular weight and number average molecular weight) of the polyethylene glycol was measured through gel permeation chromatography (GPC). PL GPC220 from Agilent Technologies was used, and the measurement conditions were as follows:
- Column (maker, model no.): PL aquagel-OH Guard 8um 50 x 7.5 mm
- Eluent : Water
- Temperature : 40°C
- Flow rate : 1.0 mL/min
- Injection volume, sample concentration : 30 µL, 1~10 mg/mL
- Standard : PEG/PEO
- Detector: RI

### Evaluation Example

### (1) Evaluation of Contact Angle of Water and Propylene Carbonate

The separators manufactured in Example 1 and Comparative Example 1 were prepared in a size of 5 × 5 cm², and 5 µl of water and propylene carbonate (PC) were each filled in a micro syringe, and water and PC drops were each added dropwise to the surface of the separators. Using a drop shape analyzer (DSA100S) from Kruss, the contact angles were evaluated by measuring the angle between the separator and the droplet using images of water and PC droplets added dropwise to the surface of the separator.

In addition, the separators manufactured in Example 1 and Comparative Example 1 were prepared in a size of 5 × 5 cm², immersed in acetone for 15 hours, and then taken out. Then, 5 µl of water and propylene carbonate (PC) were each filled in a micro syringe, and water and PC drops were each added dropwise to the surface of the separators that had been immersed in acetone for 15 hours. Thereafter, using a drop shape analyzer (DSA100S) from Kruss, the contact angles were evaluated by measuring the angle between the separator and the droplet using images of water and PC droplets added dropwise to the surface of the separator.

The results of the evaluation are shown in Table 1.

**[Table 1]**

| | Water contact angle (°) | | Propylene carbonate contact angle (°) | |
|---|---|---|---|---|
| | Untreated | After 15 hours of immersion in acetone | Untreated | After 15 hours of immersion in acetone |
| Comparative Example 1 | 112.2 | 111.6 | 44.3 | 45.3 |
| Comparative Example 2 | 112.3 | 112.6 | 45.0 | 45.1 |
| Example 1 | 99.0 | 99.0 | 39.2 | 35.7 |

Referring to Table 1, the contact angles of water and PC on the separator of Comparative Example 1 (uncoated polyethylene porous film) were 112° and 44°, respectively, and the contact angles of water and PC on the separator of Comparative Example 2 (a polyethylene porous film is coated with a 1 wt% aqueous solution of polyethylene glycol and then exposed to ultraviolet light at a dose of 11,600 mJ/cm²) were 112° and 45°, respectively. Meanwhile, the contact angles of water and PC on the separator of Example 1 (a polyethylene porous film is coated with a 1 wt% aqueous solution of polyethylene glycol containing a hydrophilic photoinitiator-derived functional group (CMTX-PEG) and then exposed to ultraviolet light at a dose of 11,600 mJ/cm²) were 99° and 39°, respectively, indicating that the separator surface was modified as compared to the separators of Comparative Examples 1 and 2.

In addition, when the separators of Example 1, Comparative Example 1, and Comparative Example 2 were immersed in acetone for 15 hours and then the contact angles were measured, the separator of Example 1 exhibited almost no change in the contact angles of both water and PC as compared to those of Comparative Example 1 and Comparative Example 2. From this, it can be inferred that a chemical bond may exist between the polyethylene porous film and the polyethylene glycol containing a hydrophilic photoinitiator-derived functional group (CMTX-PEG).

### (2) Evaluation of Electrolyte Impregnation Properties

The separators manufactured in Example 1 and Comparative Examples 1 to 3 were prepared in a size of 5 × 5 cm² and placed on a focused microscope. 2 µl of propylene carbonate (PC) was filled in a 10 µL micro syringe, and PC drops were added dropwise to the surfaces of the separators (the surfaces of the porous coating layers). After waiting for 5 minutes, the surface of the separator on which the PC droplet had spread was photographed, and the distance over which the propylene carbonate had spread outward from the initially dropwise added PC droplet was measured. FIG. 1 shows photographs of the separator surfaces on which the PC droplets had spread for the separators manufactured in Example 1 and Comparative Examples 1 to 3. Here, for the separators manufactured in Example 1 and Comparative Examples 1 to 3, the spreading distances of the PC droplets were measured and shown before UV irradiation (UV X) and after UV irradiation (20 times), respectively.

Referring to FIG. 1, for the separator of Example 1, propylene carbonate spread outward from the initially dropwise added PC droplet by distances of 4.18 mm and 3.74 to 3.813 mm before UV irradiation (UV X) and after UV irradiation (20 times), which are significantly increased values compared to those of the separators of Comparative Examples 1 to 3. From this, it could be seen that the separator of Example 1 exhibited excellent electrolyte impregnation properties. In particular, Example 1, to which the polyethylene glycol containing a hydrophilic photoinitiator-derived functional group (CMTX-PEG) was applied, exhibited more excellent electrolyte impregnation properties compared to Comparative Example 3, to which a mixture of the hydrophilic photoinitiator (CMTX) and the polyethylene glycol (PEG) was applied.

In this regard, the polyethylene glycol containing a hydrophilic photoinitiator-derived functional group is relatively nonpolar compared to an aqueous dispersion medium (e.g., water) and has a structure in which a hydrophilic photoinitiator-derived functional group is introduced into polyethylene glycol having a high affinity with an olefin polymer. Therefore, as compared to a separator coated with a composition simply including a hydrophilic initiator as in Comparative Example 3, the separator of Example 1, which was manufactured by coating a composition including polyethylene glycol containing a hydrophilic photoinitiator-derived functional group and an aqueous dispersion medium on at least one surface of an olefin polymer porous support, can be seen to allow the hydrophilic photoinitiator-derived functional group to evenly penetrate into the pores of the olefin polymer porous support, thereby exhibiting excellent electrolyte impregnation properties both before and after UV irradiation.

## Claims

1. A separator comprising:
an olefin polymer porous support,
wherein the olefin polymer porous support includes a plurality of fibrils and pores formed by the plurality of fibrils entangled with one another, polyolefin chains constituting the fibrils are directly crosslinked to each other, and
the olefin polymer porous support includes polyethylene glycol containing a hydrophilic photoinitiator-derived functional group.

2. The separator of claim 1, wherein the hydrophilic photoinitiator includes an aromatic carbonyl compound having a hydrophilic group.

3. The separator of claim 1, wherein the hydrophilic photoinitiator is represented by Chemical Formula 1 below: 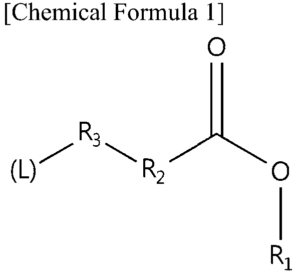 wherein R₁ is hydrogen, a linear or branched alkyl group having 1 to 10 carbon atoms, or an aryl group having 6 to 20 carbon atoms, R₂ is a single bond, a linear or branched alkylene group having 1 to 10 carbon atoms, or an arylene group having 6 to 12 carbon atoms, R₃ is a single bond, oxygen (O), or sulfur (S), and (L) is an aromatic carbonyl structure.

4. The separator of claim 3, wherein the (L) is derived from compounds represented by Chemical Formulae 2 and 3 below: 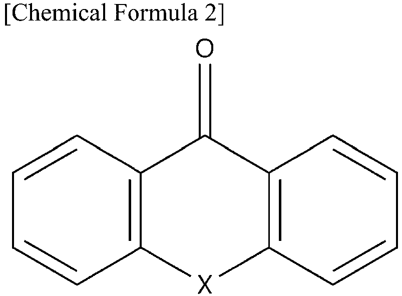 wherein X is oxygen (O) or sulfur (S)

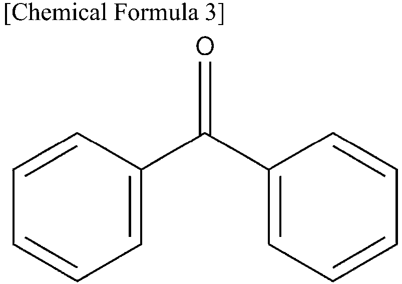

5. The separator of claim 1, wherein the hydrophilic photoinitiator includes compounds represented by Chemical Formulae 4 to 7 below: 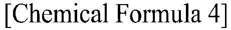 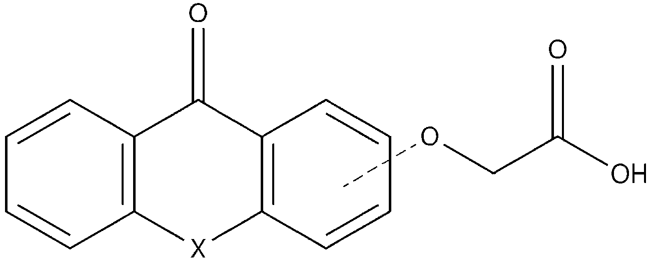 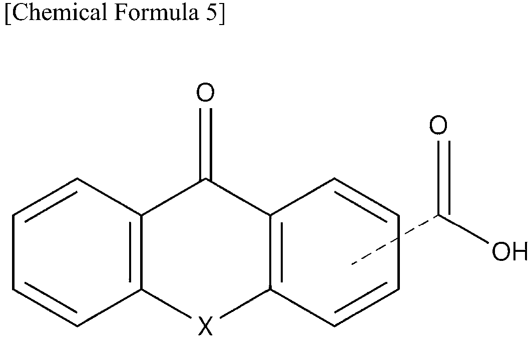 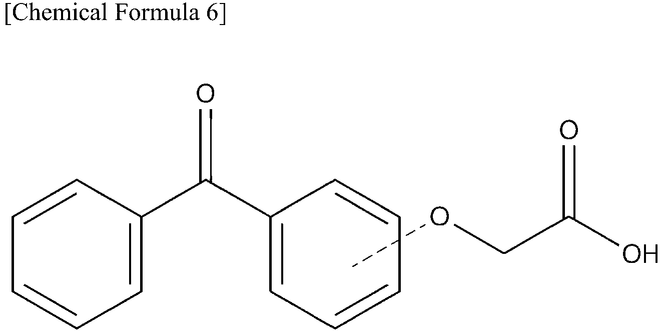 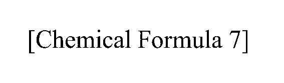 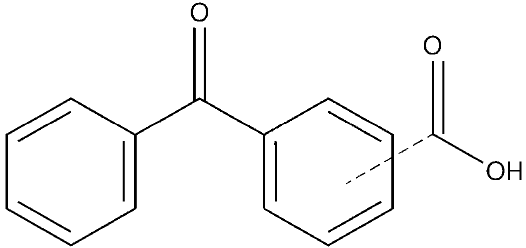 wherein X in Chemical Formulae 4 and 5 is each independently oxygen (O) or sulfur (S).

6. The separator of claim 1, wherein the polyethylene glycol containing a hydrophilic photoinitiator-derived functional group is represented by Chemical Formula 8 below: 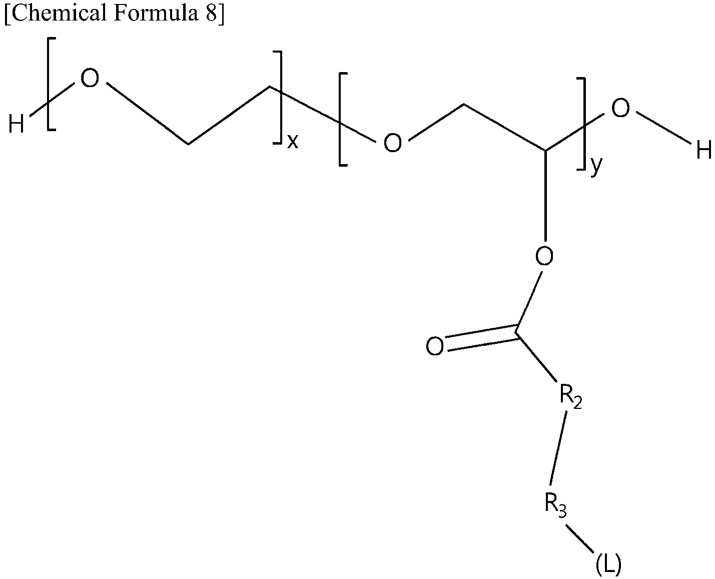
wherein x and y represent the mol% of each repeating unit, x is 95 to 99 mol%, and y is 1 to 5 mol%,
R₂ is a single bond, a linear or branched alkylene group having 1 to 10 carbon atoms, or an arylene group having 6 to 12 carbon atoms, R₃ is a single bond, oxygen (O), or sulfur (S), and (L) is an aromatic carbonyl structure.

7. The separator of claim 1, wherein the polyethylene glycol containing a hydrophilic photoinitiator-derived functional group is represented by Chemical Formulae 9 to 12 below: 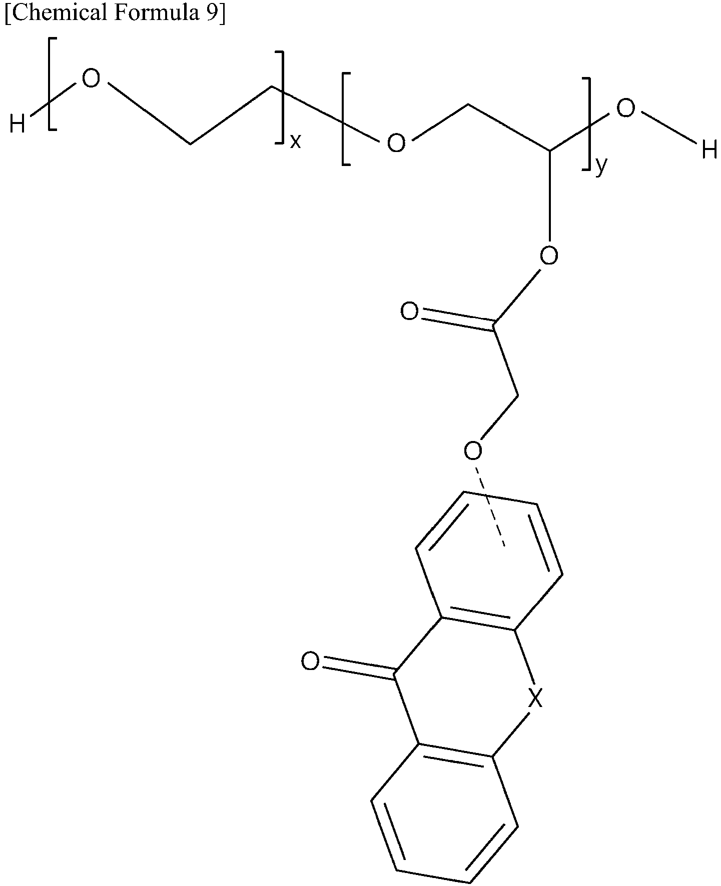 wherein x and y represent the mol% of each repeating unit, x is 95 to 99 mol%, y is 1 to 5 mol%, and X is each independently oxygen (O) or sulfur (S), 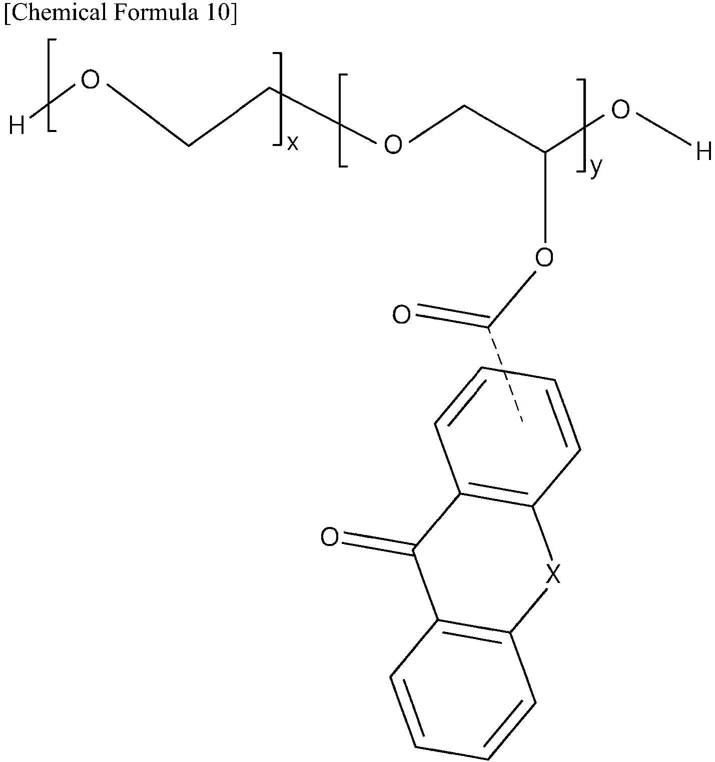 wherein x and y represent the mol% of each repeating unit, x is 95 to 99 mol%, y is 1 to 5 mol%, and X is each independently oxygen (O) or sulfur (S), 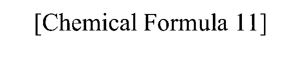 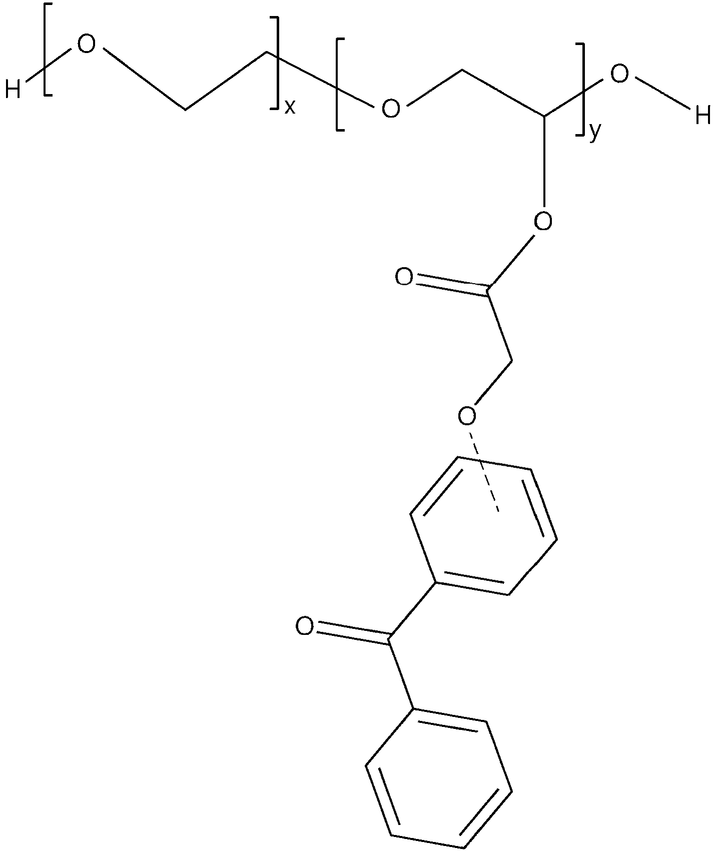 wherein x and y represent the mol% of each repeating unit, x is 95 to 99 mol%, 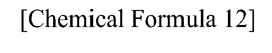 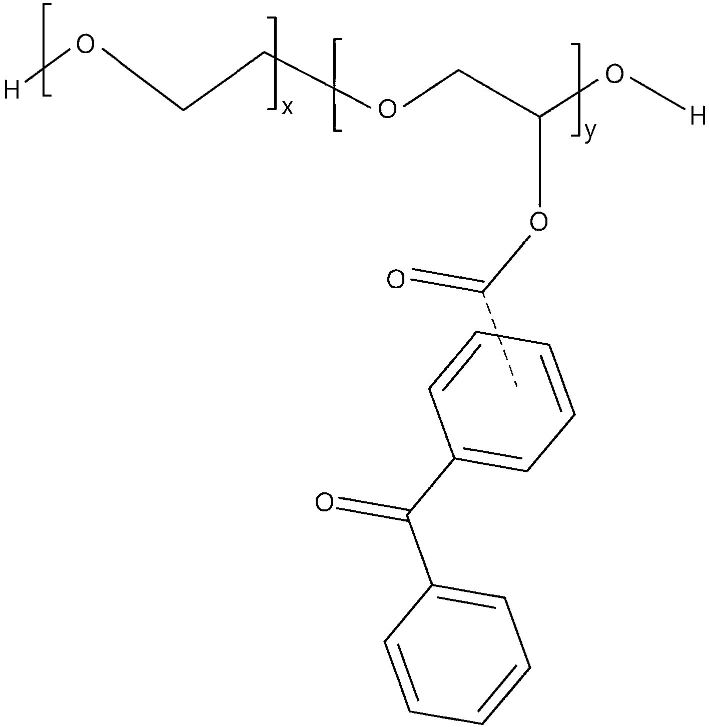 wherein x and y represent the mol% of each repeating unit, x is 95 to 99 mol%, and y is 1 to 5 mol%.

8. The separator of claim 1, wherein the polyethylene glycol containing a hydrophilic photoinitiator-derived functional group is represented by Chemical Formula 13 below: 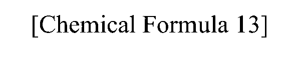 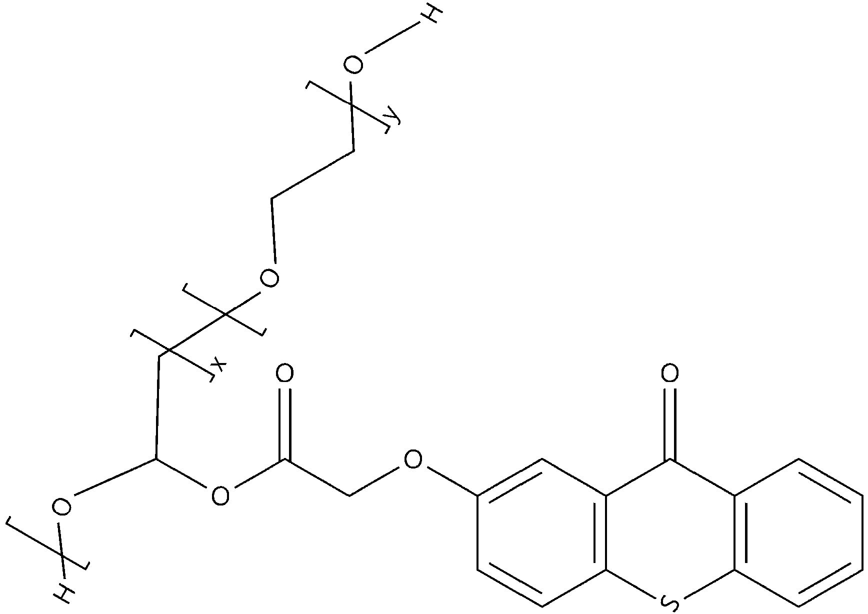 wherein x and y represent the mol% of each repeating unit, x is 1 to 5 mol%, and y is 95 to 99 mol%.

9. A lithium secondary battery comprising:
a positive electrode; a negative electrode; and a separator interposed between the positive electrode and the negative electrode,
wherein the separator is the separator according to any one of claims 1 to 8.

10. A method for manufacturing the separator of claim 1, the method comprising:
applying and drying a composition including polyethylene glycol containing a hydrophilic photoinitiator-derived functional group and an aqueous dispersion medium on at least one surface of an olefin polymer porous support; and
irradiating ultraviolet rays to the olefin polymer porous support to which the composition has been applied and dried.

11. The method of claim 10, wherein in the irradiating of the ultraviolet rays, an ultraviolet irradiation dose is 10 mJ/cm² or more and 20,000 mJ/cm² or less.
